# EUROPÄISCHE PATENTSCHRIFT

(11) **EP 1 241 348 B1**
(45) Veröffentlichungstag und Bekanntmachung des Hinweises auf die Patenterteilung: **23.03.2005**
(21) Anmeldenummer: 02005567.9
(22) Anmeldetag: 12.03.2002
(51) Int. Cl.: F02M 55/00, F02M 55/02

(54) **Hochdruckanschluss für ein Kraftstoffeinspritzsystem**
High pressure connection for fuel injection system
Raccord haute pression pour un système d'injection de carburant

(30) Priorität: 13.03.2001 DE 10111839
(43) Veröffentlichungstag der Anmeldung: 18.09.2002
(73) Patentinhaber: ROBERT BOSCH GMBH, 70442 Stuttgart (DE)
(72) Erfinder: Weisz, Gerhard, 4501 Neuhofen/Krems (AT)

(56) Entgegenhaltungen:
- EP-A- 0 569 727
- DE-A- 19 524 520
- DE-A- 19 753 054

## Beschreibung

### Stand der Technik

Die Erfindung geht von einem Kraftstoffhochdruckanschluß aus, wie er beispielsweise aus der Offenlegungsschrift DE 195 24 520 A1 bekannt ist. Der in diesem Stand der Technik gezeigte Kraftstoffhochdruckanschluß, der dort an einem Kraftstoffeinspritzventil für Brennkraftmaschinen ausgebildet ist, versorgt das Kraftstoffeinspritzventil mit Kraftstoff aus einer Kraftstoffhochdruckquelle. Das Kraftstoffeinspritzventil ist in einer Bohrung im Zylinderkopf einer Brennkraftmaschine angeordnet und ist durch einen seitlich anliegenden Druckrohrstutzen mit einer Hochdruckleitung verbunden. Der Druckrohrstutzen weist dabei an seinem zulaufseitigen Ende eine Dichtfläche auf, an der ein Anschlußkopf der Hochdruckleitung anliegt. Der Anschlußkopf wird durch eine Überwurfmutter gegen den Druckrohrstutzen gepreßt, so daß eine Abdichtung der Hochdruckleitung gegen den Druckrohrstutzen entsteht. Hierbei weist der Kraftstoffhochdruckanschluß jedoch den Nachteil auf, daß sich die Anpreßkraft des Anschlußkopfs durch Verschleiß des Anschlußkopfs auf der am Druckrohrstutzen ausgebildeten Dichtfläche mit der Zeit nachläßt und so Undichtigkeiten am Übergang der Hochdruckleitung zum Druckrohrstutzen entstehen können. Um die Dichtigkeit wieder herzustellen, müßte die Überwurfmutter weiter angezogen werden, was jedoch im Betrieb des Kraftstoffeinspritzventils, beispielsweise in der Brennkraftmaschine eines Automobils, in der Regel nicht möglich ist.

### Vorteile der Erfindung

Der erfindungsgemäße Kraftstoffhochdruckanschluß mit den kennzeichnenden Merkmalen des Patentanspruchs 1 hat demgegenüber den Vorteil, daß die Verbindung der Hochdruckleitung mit dem Hochdruckkörper auch bei längerem Betrieb stets ausreichend abgedichtet bleibt. Durch ein elastisches Element zwischen dem Spannelement und dem Anschlußkopf ist sichergestellt, daß der Anschlußkopf stets mit einer ausreichenden Kraft gegen den Hochdruckkörper verspannt bleibt.

Bei der Montage des Kraftstoffhochdruckanschlusses wird durch das Spannelement, das beispielsweise als Überwurfmutter ausgebildet ist, der Anschlußkopf der Hochdruckleitung gegen eine entsprechende Dichtfläche am Hochdruckkörper, der als Druckrohrstutzen ausgebildet sein kann, axial verspannt. Zwischen dem Anschlußkopf und einer an der Überwurfmutter ausgebildeten Druckfläche ist das elastische Element angeordnet, das sich beim Anziehen der Überwurfmutter elastisch verformt. Tritt nun im Laufe der Zeit durch wechselnde Druckbelastung und sonstige mechanische Belastungen Verschleiß an der Dichtfläche des Druckrohrstutzens auf, so läßt ohne das elastische Element die Anpreßkraft des Anschlußkopfs an der Dichtfläche des Druckrohrstutzens nach. Durch das elastische Element ist hingegen sichergestellt, daß die Anpreßkraft des Anschlußkopfs an der Dichtfläche des Druckrohrstutzens erhalten bleibt.

In einer vorteilhaften Ausgestaltung des Gegenstandes der Erfindung ist das elastische Element als Tellerfeder ausgebildet, die die Hochdruckleitung zwischen dem Anschlußkopf und der Anlagefläche des Spannelements umgibt. Eine solche Tellerfeder weist den Vorteil auf, daß sie eine elastische Verformung in Längsrichtung ermöglicht bei einem minimalen Platzbedarf, der deutlich geringer ist als beispielsweise der einer Schraubendruckfeder. In einer weiteren vorteilhaften Ausgestaltung können auch mehrere Tellerfedern übereinander angeordnet werden, um eine stärkere Anpreßkraft des Anschlußkopfs an den Druckrohrstutzen zu erreichen.

In einer vorteilhaften Ausgestaltung des Gegenstandes der Erfindung ist die Tellerfeder aus einem Federstahl gefertigt. So ist sichergestellt, daß die Anpreßkraft der Tellerfeder auch bei längerem Betrieb nicht nachläßt und stets eine ausreichende Anpreßkraft vorhanden ist.

Weitere Vorteile und vorteilhafte Ausgestaltungen des Gegenstandes der Erfindung sind der Zeichnung, der Beschreibung und den Ansprüchen entnehmbar.

### Zeichnung

In der Zeichnung ist ein erfindungsgemäßer Kraftstoffhochdruckanschluß dargestellt. Es zeigt
- Figur 1 ein Kraftstoffeinspritzventil mit einem Kraftstoffhochdruckanschluß im teilweisen Längsschnitt,
- Figur 2 eine Vergrößerung von Figur 1 im mit II bezeichneten Bereich, wobei hier die Verbindung des Anschlußkopfs mit dem Hochdruckkörper gelockert ist,
- Figur 3 den gleichen Ausschnitt wie Figur 2, wobei hier die Verbindung des Anschlußkopfs mit dem Hochdruckkörper befestigt ist und
- Figur 4 den gleichen Ausschnitt wie Figur 3 eines weiteren Ausführungsbeispiels.

### Beschreibung der Ausführungsbeispiele

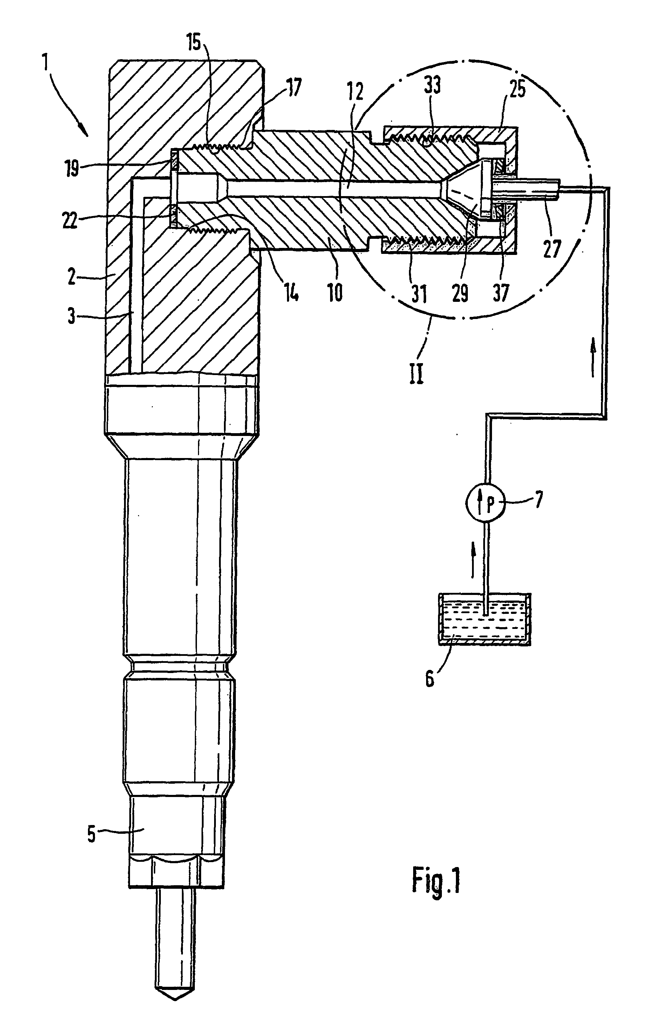

In der Figur 1 ist ein Kraftstoffhochdruckanschluß zur Kraftstoffversorgung gezeigt, der hier an einem Kraftstoffeinspritzventil 1 ausgebildet ist. Das Kraftstoffeinspritzventil 1 weist einen Ventilhaltekörper 2 und eine Einspritzdüse 5 auf, über die Kraftstoff in den Brennraum einer Brennkraftmaschine eingespritzt werden kann. Im Ventilhaltekörper 2 ist ein Zulaufkanal 3 ausgebildet, der der Einspritzdüse 5 Kraftstoff zuführt und der zulaufseitig in eine Aufnahmeöffnung 14 mündet, die seitlich am Ventilhaltekörper 2 ausgebildet ist. In der Aufnahmeöffnung 14 ist ein Innengewinde 15 ausgebildet, in welches ein als Druckrohrstutzen 10 ausgebildeter Hochdruckkörper mit einem entsprechenden Außengewinde 17 eingreift. Im Druckrohrstutzen 10 ist mittig ein Hochdruckkanal 12 ausgebildet, der an seinem dem Ventilkörper 2 zugewandten Ende in den Zulaufkanal 3 mündet. Zur Abdichtung des Übergangs vom Hochdruckkanal 12 zum Zulaufkanal 3 ist zwischen der dem Ventilhaltekörper 2 zugewandten Stirnseite 22 des Druckrohrstutzens 10 und dem Grund der Aufnahmeöffnung 14 eine Dichtscheibe 19 vorgesehen, die ringscheibenförmig ausgebildet ist und durch das Einschrauben des Druckrohrstutzens 10 in das Innengewinde 15 zwischen dem Druckrohrstutzen 10 und dem Ventilhaltekörper 2 eingespannt wird und so den Übergang vom Zulaufkanal 3 zum Hochdruckkanal 12 abdichtet.

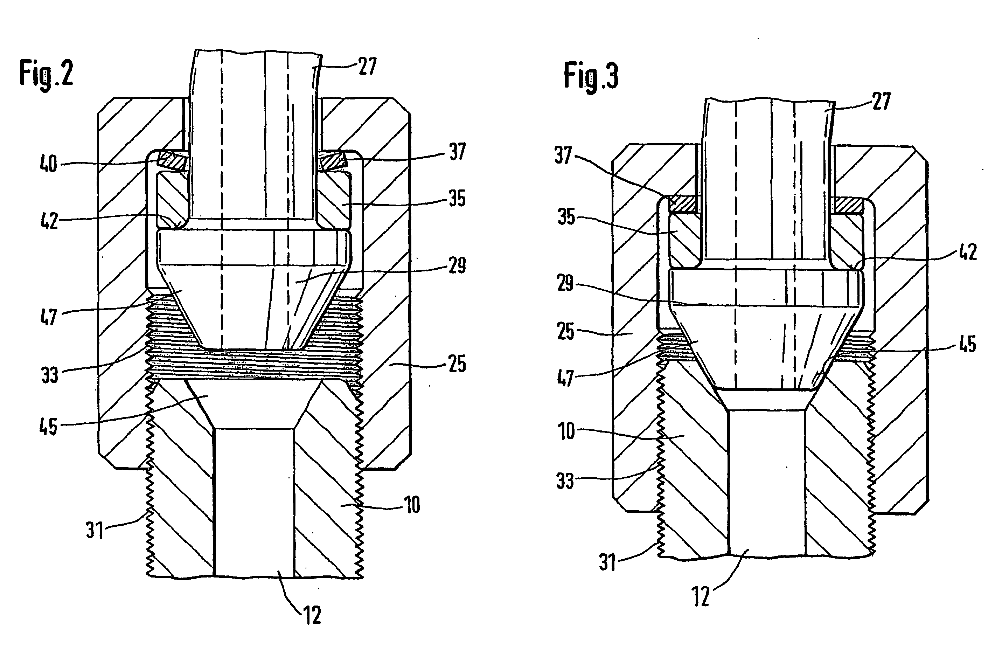

An seinem dem Ventilkörper 2 abgewandten Ende ist der Druckrohrstutzen 10 mit einer Hochdruckleitung 27 verbunden. Die Hochdruckleitung 27 ist zulaufseitig mit einer Hochdruckpumpe 7 verbunden, die als Hochdruckquelle dient und die den Kraftstoff aus einem Kraftstoffbehälter 6 fördert und über die Hochdruckleitung 27 dem Druckrohrstutzen 10 zuführt. In Figur 2 und Figur 3 ist der dem Ventilkörper 2 abgewandte Bereich des Druckrohrstutzens 10 vergrößert dargestellt, wobei in Figur 2 die Hochdruckleitung 27 noch nicht mit dem Hochdruckkanal 12 verbunden ist und in Figur 3 der Zustand mit abgedichteter Verbindung von Hochdruckleitung 27 zum Hochdruckkanal 12 dargestellt ist. Der Hochdruckkanal 12 geht anschlußseitig, d.h. dem Ventilhaltekörper 2 abgewandt, in eine Sitzfläche 45 über, die konisch ausgebildet ist und die sich dem Druckrohrstutzen 10 abgewandt erweitert. Die Hochdruckleitung 27 geht ihrerseits dem Druckrohrstutzen 10 zugewandt in einen Anschlußkopf 29 über, der an seiner Außenmantelfläche eine Dichtfläche 47 aufweist, die ebenfalls konisch ausgebildet ist und die sich dem Druckrohrstutzen 10 zugewandt verjüngt. Die Dichtfläche 47 und die Sitzfläche 45 sind hierbei so ausgebildet, daß sie bei einem entsprechenden Verspannen gegeneinander die Hochdruckleitung 27 und den Hochdruckkanal 12 miteinander dichtend verbinden. In Figur 2 ist der Zustand vor diesem Verspannen gezeigt, so daß hier die Dichtfläche 47 und die Sitzfläche 45 einen axialen Abstand aufweisen.

Der Druckrohrstutzen 10 weist an seinem der Hochdruckleitung 27 zugewandten Ende ein Außengewinde 31 auf, in das ein als Spannmutter 25 ausgebildetes Spannelement mit einem entsprechenden Innengewinde 33 eingreift. Die Spannmutter 25 umgibt den Anschlußkopf 29 und weist an ihrem dem Druckrohrstutzen 10 abgewandten Ende einen nach innen kragenden Bereich auf, so daß an der Spannmutter 25 eine dem Druckrohrstutzen 10 zugewandte Dichtfläche 40 ausgebildet ist, die hier eine Ringschulter bildet. Da der Anschlußkopf 29 im Durchmesser gegenüber der Hochdruckleitung 27 erweitert ist, ist am Anschlußkopf 29 eine ringscheibenförmige Anlagefläche 42 ausgebildet, die der Ringschulter 40 der Spannmutter 25 gegenüberliegt. Zwischen der Anlagefläche 42 und der Ringschulter 40 ist eine Zwischenscheibe 35 und eine Tellerfeder 37 angeordnet, die die Hochdruckleitung 27 umgeben. Soll nun die Hochdruckleitung 27 mit dem Hochdruckkanal 12 verbunden werden, wird die Spannmutter 25 auf den Druckrohrstutzen 10 aufgeschraubt, so daß sich die Spannmutter 25 auf den Druckrohrstutzen 10 zubewegt und damit über die Ringschulter 40 mittelbar durch die Tellerfeder 37 und die Zwischenscheibe 35 auch den Anschlußkopf 29 auf den Druckrohrstutzen 10 zubewegt. Kommt der Anschlußkopf 29 schließlich mit der Dichtfläche 47 an der Sitzfläche 45 zur Anlage, kann die Spannmutter 25 soweit eingeschraubt werden, bis die Tellerfeder 37 durch den Anpreßdruck der Spannmutter 25 verformt wird und schließlich bei maximalem Anpreßdruck eine ringscheibenförmige Form annimmt. Durch diese Verformungskraft der Tellerfeder 37 wird der Anschlußkopf 29 mit seiner Dichtfläche 47 gegen die Sitzfläche 45 gepreßt, so daß hier eine dichtende Verbindung entsteht.

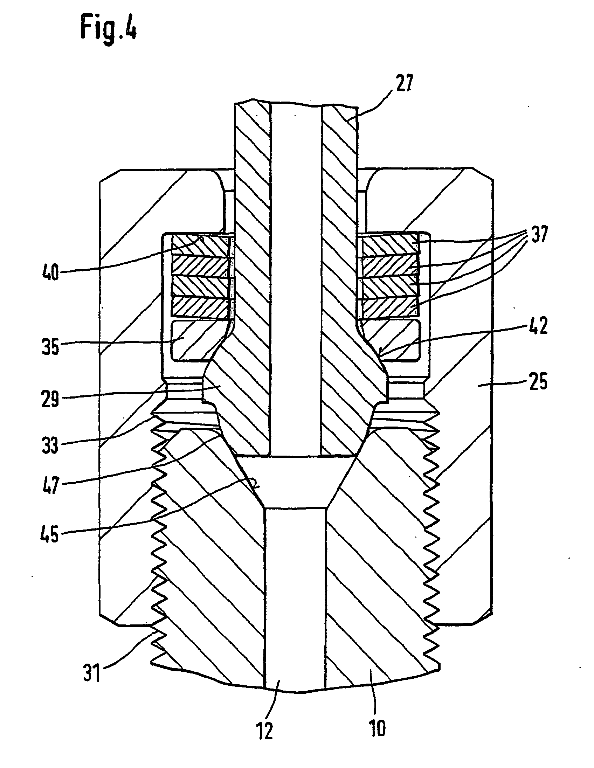

In Figur 4 ist ein weiteres Ausführungsbeispiel eines erfindungsgemäßen Kraftstoffhochdruckanschlusses dargestellt. Die Ausbildung des Druckrohrstutzens 10 und der Spannmutter 25 ist identisch mit dem in Figur 2 und 3 gezeigten Ausführungsbeispiel, jedoch ist der Anschlußkopf 29 etwas verschieden ausgebildet. Der Anschlußkopf 29 weist eine zumindest näherungsweise sphärische Anlagefläche 42 auf, an der die Zwischenscheibe 35 mit einer ebenfalls näherungsweise sphärischen Fläche anliegt. Dadurch wird die Zwischenscheibe 35 beim Verspannen des Anschlußkopfs 29 gegen den Druckrohrstutzen 10 automatisch in Kraftrichtung ausgerichtet, so daß sich eine über den Umfang gleichmäßige Anpreßkraft auf die Zwischenscheibe 35 ergibt. Zwischen der Zwischenscheibe 35 und der an der Spannmutter 25 ausgebildeten Ringschulter 40 sind vier identische Tellerfedern 37 angeordnet, die eine konische Form aufweisen. Alle Tellerfedern 37 werden beim Verspannen der Spannmutter 25 gegen den Druckrohrstutzen 10 verformt und drücken durch die Verformungskraft den Schließkopf 29 mit der Dichtfläche 47 gegen die Sitzfläche 45.

Alternativ zu den in den Figuren gezeigten Ausführungsbeispielen kann es auch vorgesehen sein, eine andere als die dargestellte Anzahl von Tellerfedern 37 zwischen der Spannmutter 25 und dem Schließkopf 29 anzuordnen. Ebenso ist es möglich, mehrere Tellerfedern 37, die konisch ausgebildet sind, mit unterschiedlicher Orientierung anzuordnen, d.h., daß die Spitze des die konische Form bildenden Kegels sowohl auf den Druckrohrstutzen 10 zu als auch von diesem weg weisen kann.

Die Tellerfedern 37 sind vorzugsweise aus Stahl gefertigt, der eine hohe Elastizität aufweist, so daß die Tellerfedern 37 auch nach längerer Zeit im verspannten Zustand ihre Anpreßkraft nicht verlieren. Besonders vorteilhaft ist die Ausbildung der Tellerfedern 37 aus einem Federstahl oder einem ähnlich flexiblen Metall.

Alternativ kann es auch vorgesehen sein, die Zwischenscheibe 35 entfallen zu lassen, so daß die Tellerfeder 37 direkt zwischen dem Anschlußkopf 29 und der Ringschulter 40 der Spannmutter 25 angeordnet ist. Hierdurch wird zusätzlich Bauraum eingespart und der Hochdruckanschluß kann entsprechend kompakter ausgeführt werden.

Neben dem in der Zeichnung darstellten Kraftstoffeinspritzventil kann es auch vorgesehen sein, den erfindungsgemäßen Kraftstoffhochdruckanschluß auch an anderen Systemen auszubilden, bei denen einer Vorrichtung Kraftstoff unter hohem Druck durch eine Hochdruckleitung zugeführt werden soll. Als Beispiele seien hier Kraftstoffhochdruckpumpen, Pumpe-Leitung-Düse-Einspritzsysteme und "Common Rail"-Hochdrucksysteme genannt. Der erfindungsgemäße Kraftstoffhochdruckanschluß kann auch an jedem anderen Hochdrucksystem verwendet werden, in dem anstelle von Kraftstoff ein anderes Fluid unter Hochdruck vorhanden ist.

## Patentansprüche

1. Kraftstoffhochdruckanschluß mit einem Hochdruckkörper (10), in dem ein Hochdruckkanal (12) ausgebildet ist, welcher an einem anschlußseitigen Ende in eine Sitzfläche (45) übergeht, und mit einer Hochdruckleitung (27), die an einem Ende einen Anschlußkopf (29) mit einer Dichtfläche (47) aufweist, welche durch ein Spannelement (25) gegen die Sitzfläche (45) gepreßt wird, wobei das Spannelement (25) mit dem Hochdruckkörper (10) verbindbar ist und eine Druckfläche (40) aufweist, welche an einer Anlagefläche (42) am Anschlußkopf (29) zumindest mittelbar anliegt, **dadurch gekennzeichnet, daß** zwischen der Druckfläche (40) des Spannelements (25) und der Anlagefläche (42) des Anschlußkopfs (29) wenigstens ein in Spannrichtung **elastisches Element** (37) angeordnet ist.

2. Kraftstoffhochdruckanschluß nach Anspruch 1, **dadurch gekennzeichnet, daß** die Anlagefläche (42) am Anschlußkopf (29) eine die Hochdruckleitung (27) umgebende Ringfläche ist.

3. Kraftstoffhochdruckanschluß nach Anspruch 1, **dadurch gekennzeichnet, daß** die Druckfläche (40) am Spannelement (25) eine Ringfläche ist.

4. Kraftstoffhochdruckanschluß nach Anspruch 1, **dadurch gekeruizeichnet,** daß die Spannvorrichtung (25) eine Überwurfmutter ist, die den Anschlußkopf (29) umgibt und in ein Außengewinde (31) am Hochdruckkörper (10) eingreift.

5. Kraftstoffhochdruckanschluß nach Anspruch 1, **dadurch gekennzeichnet, daß** das wenigstens eine elastische Element eine Tellerfeder (37) ist.

6. Kraftstoffhochdruckanschluß nach Anspruch 5, **dadurch gekennzeichnet, daß** mehr als eine Tellerfeder (37) zwischen dem Spannelement (25) und der Anlagefläche (42) des Anschlußkopfs (29) angeordnet ist.

7. Kraftstoffhochdruckanschluß nach Anspruch 5, **dadurch gekennzeichnet, daß** die Tellerfeder (37) konisch ausgebildet ist.

8. Kraftstoffhochdruckanschluß nach einem der vorstehenden Ansprüche, **dadurch gekennzeichnet, daß** das elastische Element (37) aus einem Federstahl besteht.

9. Kraftstoffhochdruckanschluß nach Anspruch 1, **dadurch gekennzeichnet, daß** sowohl die Sitzfläche (45) des Hochdruckkörpers (10) als auch die Dichtfläche (47) des Anschlußkopfs (29) konisch ausgebildet sind.

## Claims

1. Fuel high-pressure connection having a high-pressure body (10) in which is formed a high-pressure channel (12) which merges at a connection-side end into a seat surface (45), and having a high-pressure line (27) which, at one end, has a connecting head (29) with a sealing surface (47) which is pressed against the seat surface (45) by a clamping element (25), the clamping element (25) being connectable to the high-pressure body (10) and having a pressure surface (40) which at least indirectly bears against a bearing surface (42) on the connecting head (29), **characterized in that** at least one element (37) which is elastic in the clamping direction is arranged between the pressure surface (40) of the clamping element (25) and the bearing surface (42) of the connecting head (29).

2. Fuel high-pressure connection according to Claim 1, **characterized in that** the bearing surface (42) on the connecting head (29) is an annular surface which surrounds the high-pressure line (27).

3. Fuel high-pressure connection according to Claim 1, **characterized in that** the pressure surface (40) on the clamping element (25) is an annular surface.

4. Fuel high-pressure connection according to Claim 1, **characterized in that** the clamping device (25) is a union nut which surrounds the connecting head (29) and engages in an external thread (31) on the high-pressure body (10).

5. Fuel high-pressure connection according to Claim 1, **characterized in that** the at least one elastic element is a disc spring (37).

6. Fuel high-pressure connection according to Claim 5, **characterized in that** more than one disc spring (37) is arranged between the clamping element (25) and the bearing surface (42) of the connecting head (29).

7. Fuel high-pressure connection according to Claim 5, **characterized in that** the disc spring (37) is of conical design.

8. Fuel high-pressure connection according to one of the preceding claims, **characterized in that** the elastic element (37) consists of a spring steel.

9. Fuel high-pressure connection according to Claim 1, **characterized in that** both the seat surface (45) of the high-pressure body (10) and the sealing surface (47) of the connecting head (29) are of conical design.

## Revendications

1. Raccord haute pression comprenant d'une part un corps à haute pression (10) dans lequel se trouve un canal à haute pression (12) qui se poursuit, à son extrémité située du côté du raccordement, par une surface de siège (45), d'autre part une conduite à haute pression (27) présentant à une extrémité une tête de raccordement (29) avec une surface d'étanchéité (47) appliquée en pression sur la surface de siège (45) par un élément de serrage (25) qui peut être relié au corps à haute pression (10) et présente une surface de pression (40) appliquée au moins indirectement sur une surface d'appui (42) de la tête de raccordement (29),
**caractérisé en ce que**
entre la surface de pression (40) de l'élément de serrage (25) et la surface d'appui (42) de la tête de raccordement (29) est monté au moins un élément élastique (37) dans la direction de serrage.

2. Raccord à haute pression selon la revendication 1,
**caractérisé en ce que**
la surface d'appui (42) sur la tête de raccordement (29) est une surface annulaire entourant la conduite à haute pression (27).

3. Raccord à haute pression selon la revendication 1,
**caractérisé en ce que**
la surface de pression (40) sur l'élément de serrage (25) est une surface annulaire.

4. Raccord à haute pression selon la revendication 1,
**caractérisé en ce que**
le dispositif de serrage (25) est un écrou de raccordement qui entoure la tête de raccordement (29) et est engagé dans un filetage externe (31) du corps à haute pression (10).

5. Raccord à haute pression selon la revendication 1,
**caractérisé en ce que**
l'au moins un élément élastique est une cuvette élastique (37).

6. Raccord à haute pression selon la revendication 5,
**caractérisé en ce qu'**
entre l'élément de serrage (25) et la surface d'appui (42) de la tête de raccordement (29) sont montées plusieurs cuvettes élastiques.

7. Raccord à haute pression selon la revendication 5,
**caractérisé en ce que**
la cuvette élastique (37) est conique.

8. Raccord à haute pression selon une des revendications précédentes,
**caractérisé en ce que**
l'élément élastique (37) est en acier à ressort.

9. Raccord à haute pression selon la revendication 1,
**caractérisé en ce que**
la surface de siège (45) du corps à haute pression (10) ainsi que la surface d'étanchéité (47) de la tête de raccordement (29) sont coniques.
